Europäisches Patentamt

European Patent Office

Office européen des brevets

(11) Numéro de publication: **0 519 532 A1**

# DEMANDE DE BREVET EUROPEEN

(21) Numéro de dépôt: **92201396.6**

(22) Date de dépôt: **11.05.92**

(51) Int. Cl.5: **B25B 1/22**, F16M 13/02

(30) Priorité: **23.05.91 FR 9106256**

(43) Date de publication de la demande:
**23.12.92 Bulletin 92/52**

(84) Etats contractants désignés:
**DE ES GB IT**

(71) Demandeur: **MACC BATIMENT**
**Zone Industrielle du Sanital, Boîte Postale 427**
**F-86104 Chatellerault Cédex(FR)**

(72) Inventeur: **Merigot, Jean Paul**
**8 rue de la Grande Ecole**
**F-86300 Chauvigny(FR)**

(54) **Support d'étau pivotant et orientable.**

(57) Support d'étau pivotant et orientable, solidaire du plancher d'un véhicule utilitaire, et composé :
- d'une platine de fixation (1),
- d'une embase avec axe vertical (2) autour duquel tourne une chape (3) équipant une extrémité des deux bras télescopiques (6,7),
- d'une deuxième chape (11) solidaire du pied (16) et équipant l'autre extrémité des deux bras (6,7).
- d'un mât (14) solidaire dans sa partie inférieure du pied pivotant (16) et dans sa partie supérieure de la tablette (15) support de l'étau (19).

Fig 3

L'invention concerne un support d'étau escamotable et orientable destiné à être fixé dans les véhicules utilitaires, du type fourgon ou camionnette, permettant à l'artisan de pouvoir disposer d'un étau sur son chantier.

Contrairement aux autres dispositifs actuellement commercialisés, le support étau escamotable et orientable, objet de la présente invention, permet de dégager l'étau et son support hors du véhicule tout en obtenant un appui au sol très stable. Ainsi les efforts exercés sur l'étau ne sont plus répercutés sur la carrosserie du véhicule. La platine de l'appareil est fixée sur le plancher du véhicule par boulonnerie à proximité des portes arrières où latérales. L'encombrement réduit en position repliée évite toute gêne au chargement d'autres matériels. De même une parfaite immobilisation de l'appareil en position repliée évite tout basculement intempestif pendant le déplacement du véhicule. Cette immobilisation est obtenue au moyen d'une vis et d'un écrou de blocage qui relient l'ensemble mât-pied replié à la platine, tout en permettant aux deux points d'appui du dit pied ainsi immobilisé de reposer sur ladite platine. Une disposition de liaison rapide permet de désolidariser très facilement le support étau de sa platine pour libérer tout le volume intérieur du véhicule.

La conception du support d'étau permet, quel que soit le niveau du plancher du véhicule, d'obtenir la hauteur de travail habituelle et non plus celle dépendant de la hauteur dudit plancher.

Cette même conception permet la fixation de l'appareil support d'étau sur un véhicule équipé soit de portes arrières pivotantes à droite ou à gauche, soit de portes doubles, soit encore de portes latérales coulissantes ou pivotantes, de façon à obtenir le positionnement le plus fonctionnel pour une bonne utilisation du support d'étau pour un opérateur droitier ou gaucher.

De plus, cette même conception permettant un déplacement angulaire du support d'étau, par rapport à sa platine, offre la possibilité d'utiliser l'appareil indifféremment soit dans l'axe du véhicule, soit en déport sur le côté droit ou gauche ou toute autre position intermédiaire de façon à faciliter en particulier le travail à l'étau, de pièces de grandes longueurs tels que tubes, profilés, etc ...

Le déploiement du support d'étau est facilité au moyen de deux bras mobiles articulés extensibles et équipés de deux ressorts destinés à compenser le poids de l'étau et de son support et permettre sa mise en place sans effort.

Ces deux bras qui relient la platine au pied du support d'étau constituent un parallélogramme déformable du fait de leur extensibilité et du blocage du coulissement de l'un d'entre eux.

Cette disposition permet de régler l'éloignement du support d'étau par rapport au véhicule en fonction du besoin de l'opérateur.

Cette même disposition permet d'obtenir une inclinaison du pied d'appui au sol en fonction de la déclivité du sol pour une bonne stabilité du support d'étau.

Le pied repliable est prévu avec quatre points d'appui au sol. Les deux points d'appui dirigés vers le véhicule sont volontairement plus écartés pour un meilleur ancrage au sol en réponse à la poussée exercée par l'utilisateur ; les deux autres points d'appui - dirigés vers l'opérateur - sont plus rapprochés pour obtenir l'avantage d'une plus grande stabilité reconnue à un simple trépied.

Ces deux mêmes points d'appui sont réunis au moyen d'une plaque tenant lieu de repose-pied à l'opérateur.

Le mât est composé d'un tube relié au moyen d'une vis au pivot solidaire de la tablette destinée à recevoir l'étau.

La partie supérieure du mât reçoit le fourreau solidaire d'une chape et dans lequel tourne librement ledit pivot. Cette disposition autorise la rotation simultanée de la tablette porte étau et du pied.

Suivant l'invention, le support d'étau se compose :

- d'une platine de fixation sur le plancher du véhicule,
- d'une embase avec axe vertical autour duquel tourne une chape support de bras,
- de deux bras télescopiques formant un parallélogramme déformable.

Ces deux bras sont articulés d'une part, sur la chape tournante, d'autre part, dans une chape solidaire du pied support d'étau.

Un verrou automatique situé sur un de ces bras permet de régler et de limiter l'éloignement entre le support d'étau et le véhicule.

- de deux ressorts accrochés à une extrémité sur une tige solidaire de la chape tournante, à l'autre extrêmité sur une tige solidaire du bras télescopique inférieur. Lors du déploiement la tension de ces ressorts compense le poids de l'ensemble de l'appareil.
- d'un mât support d'étau relié à une tablette de fixation d'un étau. Sur la partie supérieure de ce mât tourne la chape d'extrémité des bras télescopiques. A sa partie inférieure, ce mât comporte un pied repliable , articulé et blocable en position d'utilisation ou de transport.
- d'une équerre solidaire de l'embase de la platine sur laquelle vient se verrouiller la partie mât-pied repliée (position de transport).

La figure 1 représente le support d'étau en position repliée et immobilisé pour le transport - vue de côté

La figure 2 représente le support d'étau en position repliée et immobilisé pour le transport - vue de face

La figure 3 représente le support d'étau en position d'utilisation - vue de côté avec coupe partielle du pied.

La figure 4 représente le support d'étau en position d'utilisation - vue de dessus.

La figure 5 représente la platine - embase chape tournante - coupe partielle

La figure 6 représente la platine - embase chape tournante - vue de dessus - coupe partielle

La figure 7 représente le mât du support avec tablette et chape - vue en coupe partielle.

La figure 8 représente le verrou automatique des bras télescopiques - vue en coupe

La figure 9 représente la base du pied du support d'étau replié et immobilisé - vue partielle en perspective.

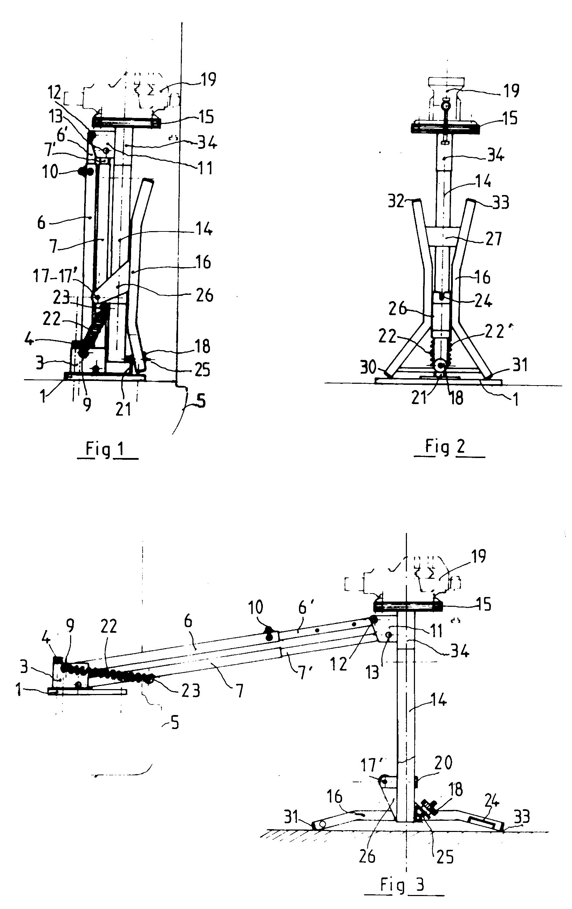

Suivant les figures 1, 5 et 6 l'appareil est fixé sur le plancher du véhicule au moyen d'une platine 1 comportant un axe vertical 2 autour duquel tourne une chape 3.

L'ensemble platine - chape peut être désolidarisé pour sortir le support d'étau du véhicule en retirant le dispositif d'assemblage 4.

Deux bras articulés et télescopiques 6, 6' et 7, 7' sont, à l'une de leur extrémité 6 et 7, solidaires de la chape tournante 3 autour du mât 14 au moyen des axes d'articulation 8 et 9.

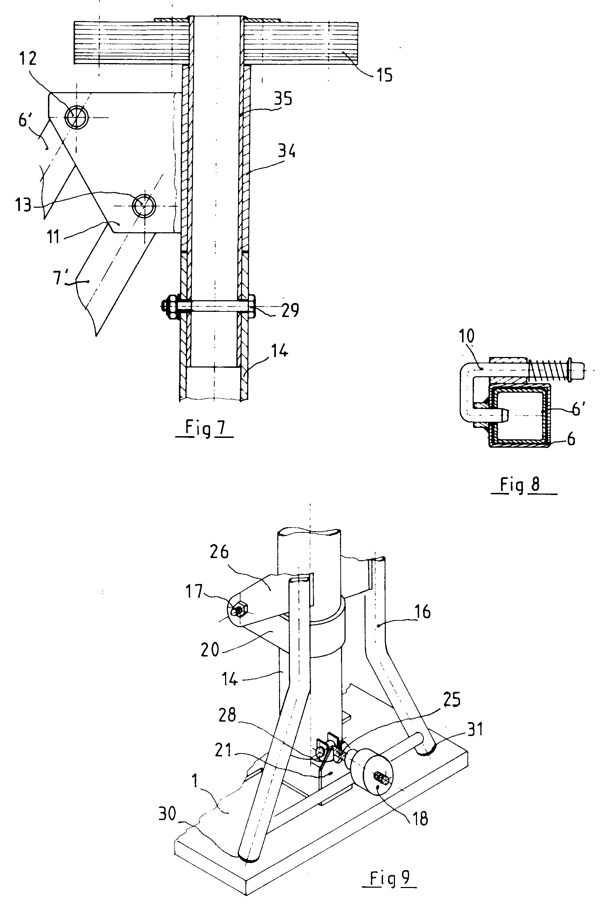

Suivant les figures 1 et 8, les parties télescopiques du bras supérieur 6, 6' sont verrouillées en position souhaitée au moyen d'un verrou automatique 10.

Suivant les figures 1 et 7, les deux autres extrémités des bras 6 et 6' sont articulées dans la chape 11 solidaire du fourreau 34 au moyen des axes 12 et 13.

Cette chape 11 tourne autour du pivot 35 solidaire dans sa partie supérieure de la tablette 15 destinée à recevoir l'étau 19.

Le mât 14 est solidaire du pivot 35 au moyen de la vis 29 de façon à obtenir la rotation simultanée de la tablette 15 et du pied 16.

Suivant les figures 1 et 3, le mât 14 est équipé, dans sa partie inférieure, d'un pied 16 articulé et rabattable autour des axes 17 et 17' reliant la chape 20 solidaire du mât 14 et la chape 26 solidaire du pied 16.

Cette disposition permet un pivotement du pied vers le bas pour la mise en position travail du support d'étau et vers le haut pour la mise en position repliée, dite de transport.

Suivant les figure 2 et 3 la chape 26 solidaire du pied 16 comporte en son extrémité inférieure une fente 24 dans laquelle vient se loger la vis articulée 25 solidaire du mât 14 pour un blocage du dit pied en position travail au moyen d'un écrou moleté 18.

Suivant les figures 1, 2 et 9, l'ensemble replié est maintenu fermement par serrage de l'écrou 18 sur une équerre 21 prolongeant la platine 1. Cette équerre possède une fente 28 dans laquelle vient se loger la vis articulée 25 recevant l'écrou mobile 18.

La mise en place de la vis 25 dans la fente 28 est facilitée par l'extrémité biaisée de chaque côté de la dite fente. Ce double biais facilite d'autre part, une fois le déblocage effectué, le déplacement à droite ou à gauche de la platine 1.

Suivant les figures 1, 2 et 4 les ressorts 22 et 22' accrochés à une extrémité à une tige 9 solidaire de la chape 3 et, à l'autre extrémité, à une tige 23 reliée au bras inférieur 7.

Les ressorts ainsi disposés assurent par leur tension, un équilibrage de l'ensemble lors de son déploiement ou de sa remontée. Suivant les figures 2, 3 et 4 l'appareil est déployé en position de travail, le pied 16 est bloqué en position au moyen de la vis articulée 25 solidaire du mât 14 et de l'écrou 18 qui vient prendre appui sur la chape 26. Le passage de la tige filetée dans cette dite chape 26 est facilitée par une ouverture 24 comme représenté sur la figure 2.

Ce serrage confère à l'ensemble mat 14 pied 16 une grande rigidité et une grande stabilité de l'ensemble en position travail.

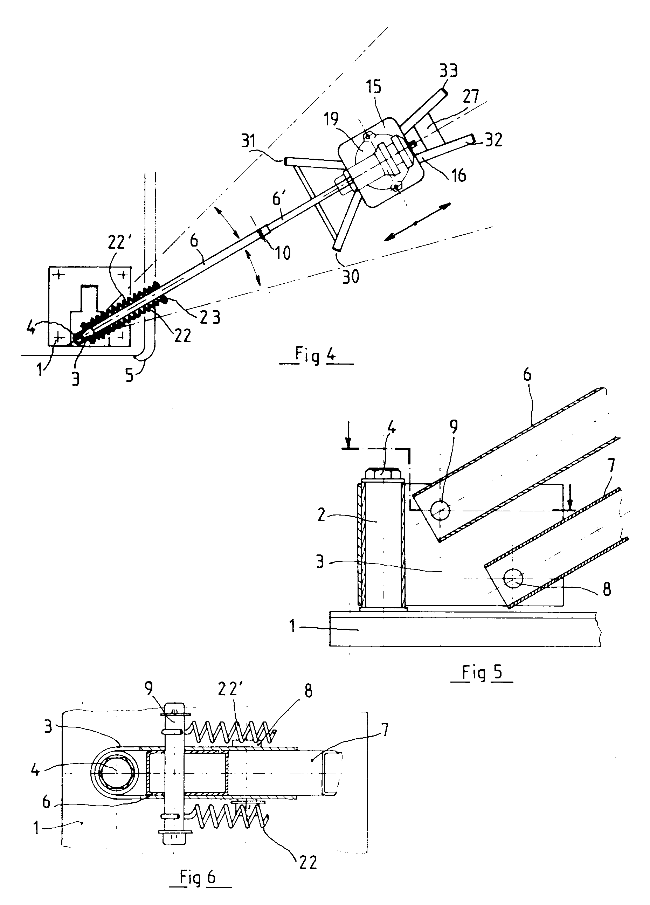

Suivant la figure 4, la chape 3 articulée autour de l'axe 2 permet de prendre angulairement la meilleure position par rapport au véhicule 5.

L'écartement par rapport à ce véhicule peut être réglé par le coulissement des deux bras télescopiques 6, 6' et 7, 7' (voir figure 3).

Selon la figure 3, le mât 14 peut s'incliner pour un appui toujours ferme du pied 16 sur le sol, puisque seul le bras télescopique 6, 6' est bloqué en coulissement pendant que le bras 7, 7' coulisse librement .

Cette disposition permet d'obtenir une rotation autour des axes 12 et 13 de la chape 11 et, par conséquent, l'inclinaison souhaitée du mât 14.

Toujours selon la figure 3, les bras télescopiques 6, 6' et 7, 7' autorisent la fixation d'un tel support d'étau sur différents véhicules ayant des planchers situés à des hauteurs différentes.

Suivant la figure 4, le pied 16 a quatre points d'appui 30, 31, 32, 33. Deux des points 30 et 31 situés face à l'opérateur sont le plus écartés possible, offrant ainsi deux points d'ancrage au sol s'opposant fermement aux efforts qu'exercera un opérateur lors (par exemple) des travaux à la scie, à la lime.

Les deux points d'appui situés côté opérateurs soit 32 et 33 sont très rapprochés permettant à l'ensemble des points d'appui 30, 31, 32, 33 d'être assimilés à la théorie des trois points d'appui sur un plan. Une plaque 27 réunit ces deux points 32 et 33 permettant à l'opérateur de poser le pied conférant ainsi à l'ensemble une plus grande rigidité.

Suivant la figure 9, deux des quatre points d'appui 30 et 31 du pied 16 prennent appui sur la platine 1, en position repliée pour le transport.

Cette disposition ajoutée au serrage de la vis 25 sur l'équerre 21 confère à l'appareil replié une stabilité parfaite pendant le transport.

**Revendications**

1. Support d'étau pivotant et orientable solidaire du plancher d'un véhicule utilitaire au moyen d'une platine 1 comprenant un mât 14 dont la partie supérieure est pourvue d'une tablette 15 destinée à recevoir l'étau 19 caractérisé en ce qu'il est composé de deux bras télescopiques en deux parties 6, 6' et 7, 7' articulés à leurs extrémités et d'un pied 16 rabattable et orientable.

2. Support d'étau pivotant et orientable suivant revendication 1, caractérisé en ce que les parties 6 et 7 des dits bras articulées à leur extrémité sur une chape 3 tournante sur un axe 2 solidaire de la platine 1 pour permettre le déploiement du support d'étau à l'extérieur du véhicule et son repliement à l'intérieur en position dite de transport.

3. Support d'étau pivotant et orientable suivant revendication 1 caractérisé en ce que les parties 6' et 7' des dits bras sont articulés à leur extrémité sur une chape 11 solidaire du fourreau 34 superposé à la partie supérieure du mât 14 pour permettre l'orientation et l'emplacement souhaité par l'opérateur du pied 16.

4. Support d'étau pivotant et orientable suivant revendication 1 caractérisé en ce que le bras télescopique 6, 6' est blocable en plusieurs points au moyen d'un verrou 10 pour maintenir l'éloignement de l'étau par rapport à l'arrière du véhicule alors que le bras télescopique 7, 7' garde sa liberté de coulissement de façon à ce que, quelle que soit la déclivité du sol, le pied 16 ait une assise stable.

5. Support d'étau pivotant et orientable, suivant revendications 1, 2, 3 caractérisé en ce que les parties 6 et 7 des bras télescopiques articulés sur la chape tournante 3 alors que les parties 6' et 7' des bras télescopiques sont articulés sur la chape 11 solidaire du fourreau 34 tournant autour du pivot 35. Cette disposition permet de fixer indifféremment la platine 1 du support d'étau à droite ou à gauche de l'arrière du véhicule tout en offrant à l'utilisateur la possibilité de déplacer latéralement le support d'étau suivant qu'il s'agisse d'un gaucher ou d'un droitier, ou encore d'une porte du véhicule ouvrant à droite ou à gauche.

6. Support d'étau pivotant et orientable suivant revendication 1 et 5 caractérisé en ce que la partie inférieure du pivot 35 est solidaire du mât 14 au moyen d'un boulon 29 alors que l'extrémité supérieure du dit pivot est solidaire de la tablette 15 sur laquelle est fixé l'étau 19. Cette disposition permet d'obtenir une rotation simultanée de la tablette 15 et du pied 16 en fonction de la position de travail souhaitée.

7. Support d'étau pivotant et orientable suivant revendication 1 caractérisé en ce que le pied 16 comporte sur sa face supérieure une chape 26 articulée sur une autre chape 20 solidaire du mât 14. Cette disposition permet le pivotement du dit pied, soit vers le haut en position repliée soit vers le bas en position travail.

8. Support d'étau pivotant et orientable suivant revendication 1 caractérisé en ce que le pied 16 comporte quatre points d'appui 30, 31, 32 et 33 dont deux (3O et 31) sont volontairement écartés de façon à obtenir un bon ancrage et une parfaite assise nécessaire à la bonne stabilité de l'ensemble pendant l'utilisation de l'étau et dont les deux autres (32 et 33) sont également volontairement rapprochés de façon à obtenir une stabilité la plus proche de celle reconnue au trépied.

9. Support d'étau pivotant et orientable suivant revendication 1 caractérisé en ce que l'écartement des points d'appui 30 et 31 du pied 16 est également défini pour obtenir dans la position repliée leur appui sur le plancher du véhicule conférant ainsi à l'ensemble une stabilité accrue pendant le transport.

10. Support d'étau pivotant et orientable suivant revendication 1 et 7 caractérisé en ce que les points d'appui 32 et 33 du pied 16 sont réunis au moyen d'une plaque 27 servant d'appui au pied de l'opérateur tout en conférant une stabilité accrue de l'ensemble pendant les travaux de limage, coudage, sciage, etc ...

11. Support d'étau pivotant et orientable suivant revendication 1 caractérisé en ce que la platine 1 est prolongée d'une équerre 21 présentant dans sa partie supérieure un logement 28 destiné à recevoir une vis orientable 25 solidaire du mât 14 et équipé d'un écrou moleté 18 dont le serrage permettra d'immobiliser fermement l'ensemble replié.

12. Support d'étau pivotant et orientable suivant revendications 1, 7 et 11 caractérisé en ce que, lorsque l'ensemble est en position de travail la même vis orientable 25 vient se placer dans un logement 24 de la chape 26 pour l'immobilisation du pied en position de travail par serrage obtenu au moyen de l'écrou moleté 18.

13. Support d'étau pivotant et orientable suivant revendication 1 caractérisé en ce que l'appareil comporte deux ressorts 22 et 22' accrochés d'une part à une tige 9 solidaire de la chape 3 et, d'autre part, à une tige 23 reliée au bras inférieur 7. Cette disposition permet de compenser le poids du support d'étau lors de son déploiement hors du véhicule ou de sa remontée en position pliée.

Fig 1

Fig 2

Fig 3

Fig 4

Fig 5

Fig 6

Fig 7

Fig 8

Fig 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-4 705 254 (M. SWANSON)<br>* abrégé; figures 1-5 *<br>--- | 1 | B25B1/22<br>F16M13/02 |
| A | DE-U-8 911 992 (E. OSCHMANN)<br>* revendication 1; figures 1,2 *<br>--- | 1 | |
| A | EP-A-0 068 258 (WEN PRODUCTS INC.)<br>* abrégé; figures 2,5,7,12 *<br><br>----- | 1 | |

**DOMAINES TECHNIQUES RECHERCHES (Int. Cl.5 )**

B25B
B25H

Le présent rapport a été établi pour toutes les revendications

| Lieu de la recherche | Date d'achèvement de la recherche | Examinateur |
|---|---|---|
| LA HAYE | 02 SEPTEMBRE 1992 | VIBERG S.O. |

**CATEGORIE DES DOCUMENTS CITES**

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

&. : membre de la même famille, document correspondant

EPO FORM 1503 03.82 (P0402)